# EUROPEAN PATENT APPLICATION

(11) **EP 2 140 933 A1**
(43) Date of publication of application: **06.01.2010**
(21) Application number: 08159530.8
(22) Date of filing: 02.07.2008
(51) Int. Cl.: B01J 19/24, B01J 19/30, B01J 19/32, B01J 8/00, B01J 8/06, B01J 35/02, C01B 3/40

(54) **Structured catalyst hold for pipe reactors**

(71) Applicant: Soyez, Werner, 53177 Bonn (DE)
(72) Inventor: Soyez, Werner, 53177 Bonn (DE)
(74) Representative: von Kreisler Selting Werner

(57) **Abstract**

Disclosed is a pipe reactor (1) comprising a tubular housing (3) with an inner surface (5) and a catalyst hold (7) for carrying at least one catalytic active agent **characterized in that** the catalyst hold (7) comprises one or more discoid carrier devices (9) with at least an upper surface (11), a lower surface (13) and an outer surface (15) wherein the outer surface (15) of each carrier device (9) is adapted to the inner surface (5) of the tubular housing (3) and in an initial state of the pipe reactor (1) the outer surface (15) of each carrier device (9) is spaced from the inner surface (5) of the tubular housing (3), such that a different thermal expansion of the tubular housing (3) and the carrier device(s) (9) is/are accommodated and wherein each carrier device (9) consists of two or more carrier elements (17).

## Description

The present invention relates to a pipe reactor which is preferably used for a steam reforming process, a catalyst carrier for a pipe reactor as well as carrier elements comprising at least one catalytic agent. Furthermore, the invention relates to the use of a carrier element as a catalyst in a steam reforming process as well as a method of loading a pipe reactor.

Certain chemical reactions require high temperatures and pressure as well as effective catalysts to convert the feedstock into the desired products in a reasonable time and efficiency. In an industrial scale many of said processes comprise gaseous reaction partners and are usually conducted in a pipe reactor or a series of parallel pipe reactors which are filled with catalyst. The catalyst hold itself consists of carrier elements which are in general small ceramic bodies with catalytic agents on their surface.

Under typical operating conditions the reactor pipe has to withstand the process pressure and temperatures, which - in case of endothermic reactions - can easily reach up to 900°C. The same conditions apply to the holds for the catalyst carrier. These catalyst carriers have to be chemically pure and must demonstrate an excellent mechanical stability in order to withstand the filling operation and the consequences of thermal stress. The material meeting these requirements is generally Al₂O/ceramic. The single carrier element is usually a small cylinder or wheel with an overall volume of a very few cubic centimetres. This size is obviously an optimum between mechanical resistance and pressure drop along the pipe axis. To increase the surface of the active agents, the carrier elements are often perforated or grooved on the outer surface.

In general, the catalyst particles are filled into the pipe reactor from the top. Various techniques such as sock loading, spiral loading, unidense loading are known in the prior art in order to establish a consistent random filling of the pipe.

EP 1 726 358 A1 discloses techniques which focus on avoiding the breakage of the catalyst particles. It is desirable to reduce the amount of breakage in order to obtain a catalyst load without fragments and a uniform bulk density along the single pipe as well as from pipe to pipe in case of a multi tube reactor.

However, the techniques known in the prior art still suffer from a significant and high amount of broken catalyst elements due to the filling height of several meters. Further, a constant filling density is hardly achieved which is due to the predetermined dimensions of the carrier elements relative to the inner diameter of the pipe reactor. Consequently, catalyst elements randomly falling during the filling process can easily become wedged inside the reactor tube, which furthermore causes bridging and void spaces. The consequence is an uneven pressure drop along the reactor pipe and also from pipe to pipe. Unifying of this pressure drop can be achieved by settling the hold mechanically. However, during said mechanical unifying process some of the void spaces collapse causing again breakage and wedging of other carrier elements.

Independently of the filling technology the intended random distribution of the carrier elements inside the hold is also assumed to establish a random inclination of the carriers against the pipe axis (= flow direction). To offer additional active surface, todays catalysts generally show perforations along their cylinder axis. However, praxis shows that the small catalyst cylinders prefer to roll into their final position, to settle predominantly horizontally: instead offering more catalytic surface to the flow, the flow is reduced respectively obstructed and the contact surface, i.e. the inner surface of the catalyst elements does no longer contribute to the catalytic reaction.

Especially, during start- and stop-operations of the pipe reactor bridging and wedging of the carrier cylinders become more critical. The increase of the temperature from the start to normal operating conditions enlarges the pipe diameter significantly whereas the catalyst carriers nearly maintain their size. Consequently the catalyst hold settles whenever the pipe reactor reaches normal operating conditions. In the opposite, the catalyst elements are crushed whenever the pipe reactor cools down and shrinks.

The above mentioned problems are typical for large scale, endothermic, high temperature processes, where directly fired tube reactors (limited in diameter by the process conditions) have to provide the heat flux required for the catalytic reactions, inside. The problems are not relevant for small-size, low pressure reactors such as miniature fuel cell reformers. Further, the problems referred to are not relevant for exothermic processes, where big catalyst holds exclude wedging, bridging and void spaces by itself (for example application EP 0 184 790 A2).

Although bridging and wedging are typical for the operation of large scale, high temperature tube reactors, no solution to the above-mentioned problems has been found so far. Some improvements focused on the filling technique to achieve a high degree of uniformity in the hold and to reduce the filling breakage. For the same purpose but even more to reduce the wedging tendency, the catalyst manufacturer have rounded the ends of the small carrier cylinders.

Besides these improvements completely new catalyst shapes have been proposed for a few specific application. DE 26 31 884 suggests a nuclear-power "fired" Autothermal Reforming (ATR) Process in combination with a sleeve-like catalyst carrier. The ATR Process is based on a tube-in-tube reactor combining the reaction- and heat-recuperation zone. Generally, the space between the inner and outer pipe is the reaction zone and as a consequence said space contains the catalyst. For this special arrangement, DE 26 31 884 suggests to shape the catalyst carrier in the form of short and tiny rings which can be stringed on the inner tube. It is obvious that the advantage of stringing a catalyst is linked to the tube-in-tube reactor concept. However, it is not applicable for todays large-scale, single flow/single tube reactors.

Stacking a catalyst carrier is further proposed in EP 0 677 327 B1 which refers to a small-size reformer being an intrinsic part of a fuel cell. In this case, the catalyst carrier is shaped as a perforated or grooved plate respectively covering the cross sectional area of the reformer chamber containment walls. If those plates are stacked, the grooves/perforation can serve as pass ways either for the reformed gas or - if coated with catalyst - as heat recuperation - and reaction - zone. Further, according to EP 0 677 327 B1 a non-rigid, porous alumina support is suggested as flexible carrier material. However, said carrier material as well as the construction of the catalyst elements are not advantageous for long, large diameter, single flow reactor tubes. Apart from the multi flow concept, the mechanical strength required for the carriers to withstand loading and normal operation can only be met with carrier elements of a few cubic centimetres, calling for a non-porous alumina, pressed to rigidity and sintered to strength and hardness.

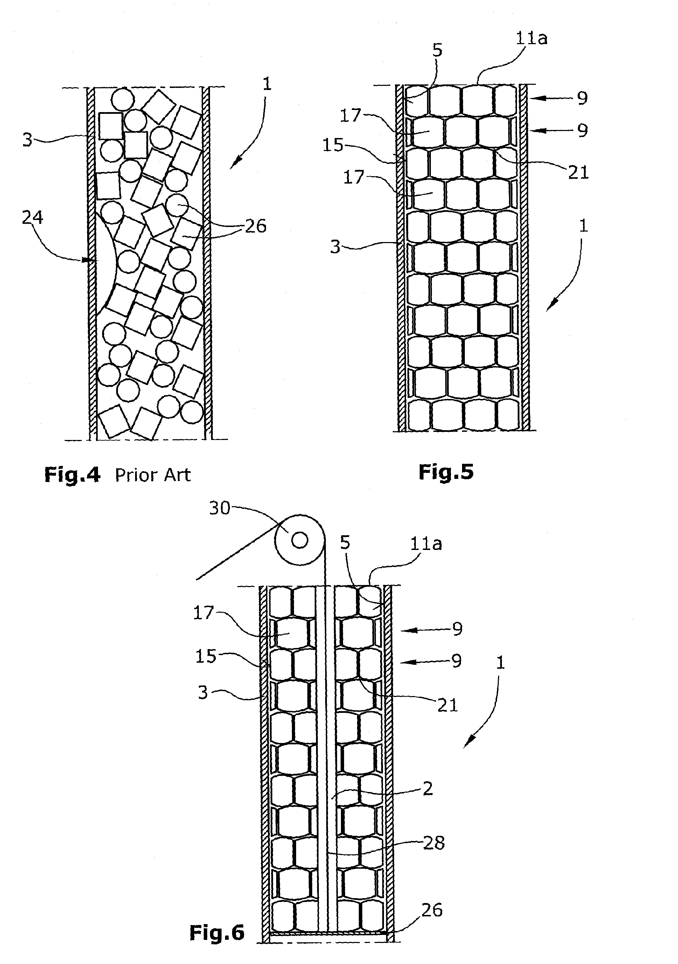

Irregularities of the catalyst hold can lead to hot spots within the pipe reactor (see [24] in Figure 4). Hot spots appear in those areas of the reactor pipe, where the heat uptake by the reactants is reduced. This can be caused by either flow restrictions or by less catalytic surface per volume element, e.g. void spaces. Irregularities in the catalyst hold can further sum up to overfilling or underfilling of a reactor pipe. The main reason for said irregularities which occur quite frequently in the prior art is a mismatch between the shape and size of the catalyst carrier elements relative to the inner diameter of the pipe reactor. Mechanical strength and pressure drop across the catalyst hold called for a catalyst carrier element in the form of a perforated cylinder having a diameter and height respectively of from 16 to 20 mm. However, the inner diameter of the reactor pipe is generally restricted by the material properties to a range of from 85 to 100 mm. Relative to the size of the catalyst carrier elements the inner diameter of reactor is too small to ensure a regular and homogenous filling.

Hence, the objective of this invention is to provide a catalyst carrier device or a catalyst element which can be used in a pipe reactor and which avoids the above-mentioned disadvantages and which allow an efficient and consistent filling of the reactor tubes.

### Summary of the Invention

The above-mentioned objective is achieved by a pipe reactor having a specific carrier device consisting of carrier elements.

### Description of the Figures

The Drawings exemplarily show certain embodiments of the present invention as presently preferred. It should be understood that the invention is not limited to the embodiments disclosed as examples, and is capable of variation within the scope of the appended claims.

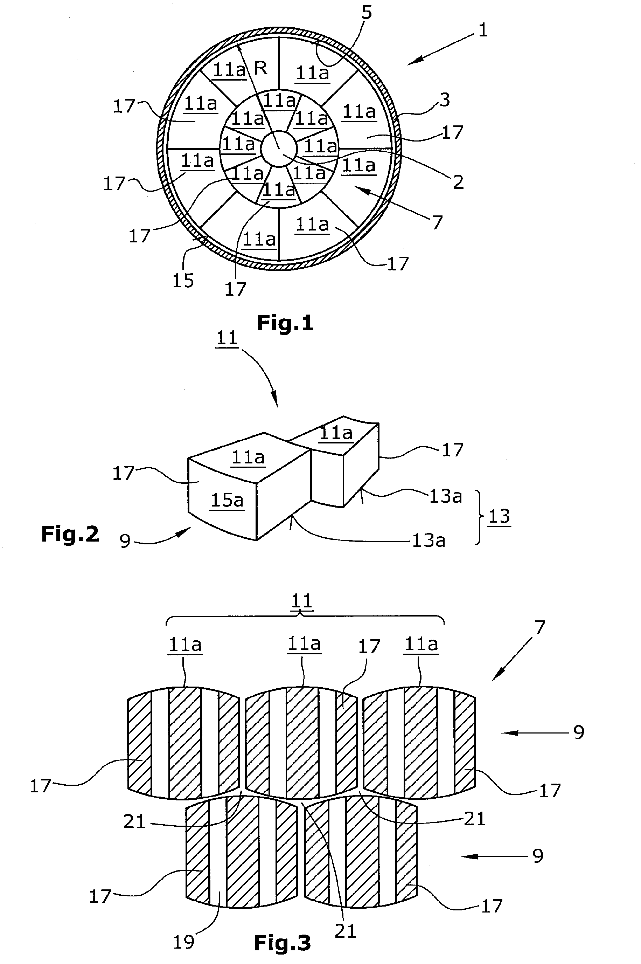

Figure 1 shows a cross section of a filled pipe reactor (1) with a tubular housing (3), an inner diameter (R) and a inner surface (5). The pipe reactor is filled with a catalyst hold (7), comprising one or more discoid carrier devices (9) with an upper surface (11), a lower surface (13) and an outer surface (15). The carrier device (9) comprises a central element (2) in the shape of a disc or a ring.

Figure 2 further shows a section of a discoid carrier device (9) comprising carrier elements (17) with an upper surface (11a), a lower surface (13a) and an outer surface (15a).

Figure 3 shows a section of two layers of stacked carrier devices (9) consisting of carrier elements (17) comprising a perforation (19). The upper surface (11a) and lower surface (13a) of each carrier element (17) is curved, such that between adjacent carrier devices (9) duct-shaped spaces (21) are formed.

Figure 4 shows the side view of a filled pipe reactor (1) according to the prior art comprising a tubular housing (3). The filled pipe reactor according to the prior art is randomly filled with cylindrical catalyst carrier elements (26). The catalyst hold according to the prior art comprises void spaces (24) which lead to hot spots during the operating of the pipe reactor.

Figure 5 shows a side view of a filled pipe reactor (1) according to the invention.

Figure 6 exemplarily shows a method of loading a pipe reactor with a catalyst hold (7). The carrier elements (17) are arranged to carrier devices (9) which are stacked stepwise on top of each other. The arranged carrier elements or carrier devices respectively are arranged on a movable catalyst support (26) within the tubular housing (3) of the reactor pipe (1) and is fixed by a strand (28). On top of the tubular housing (3) of the pipe reactor (1) the carrier elements (17) can be arranged to carrier devices (9). Subsequently, the movable carrier support (26) is moved downwards stepwisely. The step of arranging the carrier elements (17) and moving the movable catalyst support (26) downwards can be repeated a sufficient number of times to fill the catalyst hold. The strand (28) is controlled by a rope winch (30).

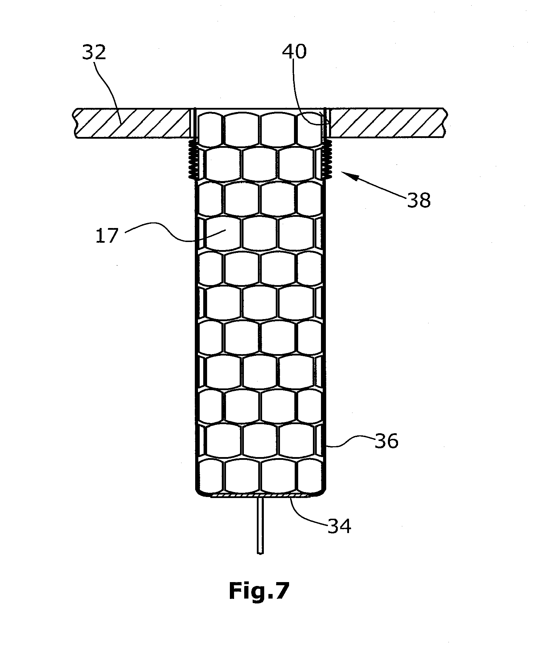

Figure 7 exemplarily shows a method to manufacture a predefined portion (38) with arranged carrier elements (17). The dish (32) comprises a circular hole with a sleeve (40) of the inner diameter of the reactor pipe to arrange the catalyst elements (17) on a movable table (34). Lowering the table (34) stepwisely the arranged catalyst elements (17) slight into the foil (36).

Definitions: According to the present invention a catalyst hold is the entire amount of carrier elements comprising at least one catalytic agent. A carrier device according to the present invention has a discoid shape and comprises the arranged carrier elements. A carrier element is the smallest unit to build up the carrier device.

### Detailed Description of the Invention

A first embodiment of the present invention is a pipe reactor (1) comprising a tubular housing (3) with an inner surface (5) and a catalyst hold (7) for carrying at least one catalytic active agent wherein the catalyst hold (7) comprises one or more discoid carrier devices (9) with at least an upper surface (11), a lower surface (13) and an outer surface (15) wherein the outer surface (15) of each carrier device (9) is adapted to the inner surface (5) of the tubular housing (3) and in an initial state of the pipe reactor (1) the outer surface (15) of each carrier device (9) is spaced from the inner surface (5) of the tubular housing (3), such that a different thermal expansion of the tubular housing (3) and the carrier device(s) (9) is accommodated and wherein each carrier device (9) consists of two or more carrier elements (17).

Especially for pipe reactors which are used for a steam reforming process the tubular housing of the pipe reactor has to resist the high pressure and temperature conditions. It has been found that a pipe reactor with a tubular housing having a circular cross section is most suitable to cope with the reaction conditions which are necessary for the steam reforming process.

Therefore, according to a preferred embodiment of the pipe reactor of the present invention the tubular housing (3) and each carrier device (9) have a circular cross section.

Typical pipe reactors for steam reforming processes have an inner diameter of 4 to 5 inch. To fill up the inner cross section of the tubular housing of the pipe reactor it has been found advantagely to use carrier elements which are not too large and not too small. Carrier elements which are too large are more exposed to breakage and material inconsistencies due to an inhomogeneous sintering process. Furtermore, too large carrier elements are the main reason for filling irregularities. On the other hand elements which are too small cause an increased pressure drop within the pipe reactor.

Therefore, preferably the discoid carrier devices (9) are each composed of two to four concentric rings wherein the carrier elements (17) are in the shape of ring segments.

Alternatively, the carrier device (9) is composed of two or more carrier elements (17) in the shape of a sector.

Advantageously, the upper and lower surfaces (11a) and (13a) of the carrier elements (17) are substantially parallel and rectangular to the pipe reactor axis, to permit a free radial expansion when exposed to the operating temperatures.

Substantially parallel and rectangular within the meaning of the present invention is a deviation of up to 5°, preferably up to 2°, more preferably less than 1° from the pipe reactor axis. The substantially parallel and rectangular alignment of the carrier elements within the tubular housing of the pipe reactor has the advantage that the grooves and ducts are optimal aligned to provide the gaseous educts with an access to the catalytic surface and, furthermore, the alignment reduces the pressure drop across the hold which is economically favourable.

Depending on the reactor type the carrier device can comprise a central element (2) in the shape of a disc or a ring.

The central element (2) can preferably be filled with a cylindrical carrier element which preferably fits to the dimensions of the carrier device (9).

In a further preferred embodiment of the present invention the carrier elements (17) are annular formed or formed in the shape of ring segments, whereby preferably the carrier elements (17) form an outer ring and an inner ring of the carrier device (9).

Preferably, each carrier device (9) comprises one or more ducts (19) extending in axial direction of the pipe reactor.

According to a preferred embodiment of the present invention at 25°C the cross section of the carrier device (9) covers 80% or more, preferably 90% or more of the inner cross section of the tubular housing (3).

For endothermic reactions which require a catalyst it is advantageously to have a large surface of the catalyst. The larger the surface the more effective is the conversion of the educts. Therefore, the surfaces (11, 13, 15) of the carrier devices (9) preferably comprise grooves to enlarge the reacting surface of the catalyst hold (7). Furthermore the carrier elements (17) preferably comprise perforation which additionally contributes to the enlargement of the catalyst surface.

Especially under the conditions of a steam reforming process it is advantageous to use a catalyst carrier which resist the high temperatures. Therefore in a preferred embodiment the catalyst hold (7) is made of ceramic, preferably Al₂O ceramic.

The catalyst carrier devices (9) can be stacked layerwise which leads to a dense packing of the catalyst carrier (9) and consequently a higher density of catalyst per volume in the reactor pipe. Therefore according to a preferred embodiment of the present invention the catalyst hold (7) comprises two or more carrier devices (9) which are stacked on top of each other. Furthermore, especially for pipe reactors which are used for the steam reforming process it is important to have a good balance between residence time, pressure drop and gas flow within the pipe reactor. In order to ensure that the gaseous educts have sufficient access to the catalytic surfaces of the carrier devices it is preferred that the lower and/or the upper surface (11, 13) of each carrier device (9) or a lower and/or an upper surface (11a, 13a) of each carrier element (17) is curved, such that between adjacent carrier devices (9) duct-shaped spaces (21) are formed, which preferably extend in a direction perpendicular to the axial direction of the pipe reactor (1). Additionally, it is preferred that that the carrier elements (17) of adjacent carrier devices (9) are arranged in an offset manner of each other.

A further embodiment of the present invention is a catalyst hold for a pipe reactor as used in the pipe reactor of the present invention.

A further embodiment of the present invention is a carrier element (17) in the shape of a ring segment or in the shape of a sector of a disc comprising at least an upper surface (11a), a lower surface (13a) and an outer surface (15a), wherein the carrier element comprises at least one catalytic agent.

The carrier elements according to the present invention can preferably be used as the carrier element in the pipe reactor according to the present invention. Preferably, the carrier element is in the shape of a ring segment which allows to arrange the ring segments to a regular ring with a coplanar upper surface (11a) and a coplanar lower surface (13a) being essentially rectangular to the pipe axis. For practical reasons the center element (2) of such a ring might be filled with a round- or polygonal cylinder center piece of the same height. The catalyst carrier device (9) of the present invention comprises the carrier elements (17) of the present invention which preferably build up concentric rings wherein the final array of the concentric ring(s) - with our without the central element (2) - shows a radial symmetry and forms a circular cylinder, covering preferably at least 80% of the inner cross section of the reactor tube.

Figure 1 and Figure 2 exemplarily show the principle of the ring arrangement of the carrier elements according to the present invention. To fill a four inch or a five inch reactor pipe 2 to 4 rings - without or without a center element (2) can be selected to build up the carrier device (9). In a preferred embodiment the carrier element according to the present invention in the shape of a ring segment or the sector of a disc covers about 15 to 25 degrees. In a preferred embodiment the angle of the ring segments or the sectors of a disc of the inner rings are higher than the respective angles of the outer rings. Preferably the height in the axial direction of the carrier elements are from 15 to 30 mm.

Further following this invention, the upper surface (11a) and lower surface (13a) of the carrier element (17) allow to place the single carrier elements in a defined upright (i.e., axial) position. Preferably, all side- and radial surfaces expanding in axial direction show vertical gaps to the adjacent surfaces to foster an even flow in axial direction and to ensure a uniform and effective use of the catalytic surfaces.

Therefore, the surfaces (11a, 13a, 15a) of the carrier element (17) preferably comprise grooves and/or are perforated.

Additionally, according to a preferred embodiment the carrier element (17) comprises a lower and/or a upper surface (11a, 13a) which is curved. The curved surfaces allow an arrangement of the elements which generate duct shaped spaces (21) between the carrier devices (9) and, as a consequence, lead to an increased surface of the catalyst for the gaseous educts. The same effect can be achieved with V-shaped upper and lower surfaces of different inclinations, however the principle of rest-surfaces respectively rest-lines being substantially perpendicular to the pipe axis should preferably be maintained.

In a further preferred embodiment of the present invention the carrier elements additionally comprise bosses on the surfaces. The bosses can build up spaces between the substantially parallel aligned surfaces in order to increase the access to the catalytic surfaces.

Advantageously, the carrier element of the present invention comprises sintered alumina or ceramics. In principle all material which resist the conditions of the respective reaction can be used as the basic material for the carrier elements. Of course, the basic material should be able to support the catalytic agent.

Preferably, the carrier element comprises a catalytic agent which is selected from the group consisting of nickel, palladium, platinum or mixtures thereof.

According to a preferred embodiment of the present invention the carrier element according to the invention is in the shape of a regular ring segment. Preferably the height of the ring segments (distance between the upper surface 11a and the lower surface 13a) is in a range from 15 to 30 mm. Preferably, the carrier element in the shape of a ring segment or a sector of a disc covers an angle of 15 to 25 degrees. However, in the discoid carrier device which preferably comprises an outer ring and an inner ring consisting of the carrier elements according to the present invention the angle covered by the carrier elements for the inner ring is preferably twice as much as for the carrier elements of the outer ring. Preferably each of the carrier elements comprise up to 8 perforations consisting of preferably 4 to 8 ducts extending in the flow direction (from the upper surface 11a to the lower surface 13a). Preferably said ducts have an inner diameter of 2 to 5 mm.

A further embodiment of the present invention is the use of a carrier element according to the invention or a catalyst hold according to the invention or a pipe reactor according to the invention for a steam reforming process.

In particular, the technical advantages of the catalyst hold (7) according to this invention that are wedging, bridging and breakage during filling or thermal cycling are excluded. Due to the regular structure an optimal density without void spaces can be achieved. The alignment of the carrier elements (17) provides the full exposure of the catalytic surfaces to the (axial) flow, i.e.,: no flow obstruction, no idle perforation. In addition, there is no need to control the pipe differential pressure and to adjust it. The single carrier element or carrier device can follow the thermal expansion without being obstructed by wedging or lifting the catalyst hold, and consequently the negative effects of thermal cycling are compensated.

The specific arrangement of the carrier elements to carrier devices requires a new loading technique.

Therefore, a further embodiment of the present invention is a method of loading a pipe reactor comprising the steps
a) arranging the carrier elements (17) according to the present invention to one or more ring(s) or a disc;
b) stacking a further ring or disc as prepared in step a) on top of the disc or ring;
c) repeating step b) a sufficient number of times to fill the catalytic hold.

The carrier elements (17) are preferably arranged to discoid carrier devices (9). The carrier devices (9) are stacked on top of each other to build up the catalyst hold.

According to a preferred embodiment the carrier elements (17) are arranged on a movable catalyst support (26) within the pipe which is preferably fixed by a strand (28). The movable catalyst support (26) can be a stool where the catalyst hold (7) normally rests on. Preferably, the movable catalyst support (26) is fixed by a strand (28) which allows for a stepwise movement of the movable catalyst support (26) downwardly. The strand (28) is preferably consisting of a material which decomposes under the reaction conditions of the steam reforming process without leaving solid residues. Preferably the strand is consisting of carbon fibres or precursors of it or organic polymers such as polyethylene, nylon or polypropylene.

According to a further preferred embodiment of the method according to the present invention, the carrier elements (17) or carrier devices (9) can be preassembled in the form of short cylinders or portions (38) comprising one or more carrier devices. These portions show preferably a length of 10 to 100 cm. The carrier devices and carrier elements, respectively are fixed with a net or foil or tissue, preferably of a material which decomposes under the reaction conditions of the steam reforming process without leaving solid residues. The net, foil or fabric preferably at least partly covers the carrier devices and carrier elements of the portion (38). A preferred material which at least partly covers the preassembled portion (38) are carbon fibres or precursors of it or organic polymers such as polyethylene, nylon or polypropylene. Of course, it is preferred that the organic polymers are free of components which reduce the catalyst activity such as halogens, metals and so on. The preassembled portions (38) comprising one or more carrier devices (9) can be prepared as explained in Figure 7. According to a preferred embodiment of the present invention the foil which covers the portion (38) is a shrinkable foil. A further embodiment of the present invention is a preassembled portion comprising one or more carrier devices (9) consisting of arranged carrier elements (17) according to the present invention.

### Examples

In addition to the technical advantages, the operational benefits were further verified in subsequent tests.
A. A standard Primary Reformer catalyst has been randomly filled into a transparent pipe ID = 74.2 mm reproducing the sock loading of a 3" reactor pipe. The catalyst carriers where small cylinders (height: 16 mm; diameter: 20 mm) with coaxial perforations (holes). The outcome of 4 tests is shown below.
1. Catalyst density after random filling: 570 catalyst carriers/m reactor length
2. Catalyst density after mechanically settling:650 catalyst carriers/m reactor length
   For comparison:
3. Density of carrier elements showing the same mass and porosity as specified in A, but shaped and adapted to the pipe diameter according to Fig. 2 (ring segments which cover 20° and which are arranged to discoid carrier devices) and loaded according to the method of the present invitation: 800 catalyst carriers/m reactor length.
The result shows that a packing of carrier elements according to the invention in the shape of ring segments allows for a 40% higher filling rate compared to random filling.
B. The single catalyst carrier elements in a hold filled according to A1 were counted and classified according to their inclination against the pipe axis (flow direction).

**Again the results of 4 independent tests are reported.**

| | | |
|---|---|---|
| I. | Laying (vertical to flow direction) | 40% |
| II. | 5° to 25° degree (slightly inclined to flow direction) | 17% |
| III. | 25° to 65° degree (inclined to flow direction) | 15% |
| IV. | upright (almost aligned to flow direction) | 28% |

These tests prove the preferably horizontal settling during random filling.
C. The perforation is supposed to contribute to about 50% to the total active surface. This only holds for vertically positioned carriers. The flow of the reactants through the perforation is a function of the pressure drop along the single carrier element. For inclined carriers the flow and hence the contribution to the reaction lessens gradually with its inclination angle to become zero for an angle of 90° (rectangular to the flow direction).
Expressing the results of B. in terms of active surface reduction, the random inclinations of the catalyst particles lead to a reduction by 38%.
D. A commercial reformer catalyst filled according to A2 resulted in 1.7 m²/m filling height. Taking into account the results of C. only 1.1 m²/m filling are effectively contributing to the reaction. Starting from the same porosity (percentage of perforated area per sectional area of a catalyst cylinder) an active surface of more than 2 m²/m filling height could be reached according to this invention.

These results show the combined impact of an aligned filling according to this invention versus random filling. The advantages are obvious: More active surface/reactor length allows for less catalyst filling resp. shorter or less reactor pipes. For existing reformers, "short loading" of the reactor pipes saves catalyst and reduces the operating pressure drop.

## Claims

1. Pipe reactor (1) comprising
a tubular housing (3) with an inner surface (5)
and a catalyst hold (7) for carrying at least one catalytic active agent
**characterized in that**
the catalyst hold (7) comprises one or more discoid carrier devices (9) with at least an upper surface (11), a lower surface (13) and an outer surface (15)
wherein the outer surface (15) of each carrier device (9) is adapted to the inner surface (5) of the tubular housing (3) and in an initial state of the pipe reactor (1) the outer surface (15) of each carrier device (9) is spaced from the inner surface (5) of the tubular housing (3), such that a different thermal expansion of the tubular housing (3) and the carrier device(s) (9) is/are accommodated and wherein each carrier device (9) consists of two or more carrier elements (17).

2. Pipe reactor according to claim 1, wherein the discoid carrier devices (9) are each composed of two to four concentric rings and wherein the carrier elements (17) are in the shape of ring segments (17).

3. Pipe reactor according to either of the claim 1 or 2, wherein the carrier device (9) is composed of two or more carrier elements (17) in the shape of a sector.

4. Pipe reactor according to at least either of the preceding claims, wherein the upper and lower surfaces (11a) and (13a) of the catalyst elements (17) are substantially parallel and rectangular to the pipe reactor axis, to permit a free radial expansion when exposed to the operating temperatures.

5. Pipe reactor of claim 1, wherein the carrier elements (17) are annular formed or formed in the shape of ring segment, whereby preferably the carrier elements (17) form an outer ring and an inner ring of the carrier device (9).

6. Pipe reactor according to at least either of the preceding claims, wherein the cross section of the carrier device (9) covers 80% or more of the inner cross section of the tubular housing.

7. Pipe reactor according to at least either of the preceding claims, wherein the catalyst hold (7) comprises two or more carrier devices (9) which are stacked on top of each other.

8. Pipe reactor according to claim 7, whereby the lower and/or the upper surface (11, 13) of each carrier device (9) or a lower and/or an upper surface (11a, 13a) of each carrier element (17) is curved, such that between adjacent carrier devices (9) duct-shaped spaces (21) are formed, which preferably extend in a direction perpendicular to the axial direction of the pipe reactor (1).

9. Catalyst hold for a pipe reactor according to at least either of the preceding claims.

10. Carrier element (17) in the shape of a ring segment or in the shape of a sector of a disc comprising at least an upper surface (11a), a lower surface (13a) and an outer surface (15a), wherein the carrier element comprises at least one catalytic agent.

11. Carrier element according to claim 10, wherein the lower and/or the upper surface (11a, 13a) of each carrier element (17) is curved.

12. Use of a pipe reactor according to claims 1 to 8 or a catalyst hold according to claim 9 or a carrier element according to claim 10 or 11 for a steam reforming process.

13. Method of loading a pipe reactor comprising the steps
a) arranging the carrier elements (17) according to claim 10 or 11 to one or more ring(s) or a disc;
b) stacking a further ring or disc as prepared in step a) on top of the disc or ring;
c) repeating step b) a sufficient number of times to fill the catalyst hold (7).

14. Method according to claim 13, wherein the carrier elements (17) are arranged on a movable catalyst support (26) within the pipe which is preferably fixed by a strand (28).

15. Method according to either of claims 13 or 14, wherein the carrier elements (17) are arranged to build a portion (38) comprising one or more carrier devices (9) which are preferably at least partly covered by a foil or net or fabric.
